# EUROPÄISCHE PATENTSCHRIFT

(11) **EP 0 498 092 B1**
(45) Veröffentlichungstag und Bekanntmachung des Hinweises auf die Patenterteilung: **03.05.1995**
(21) Anmeldenummer: 91300807.4
(22) Anmeldetag: 01.02.1991
(51) Int. Cl.: H04L 12/56

(54) **Verfahren zur Überwachung und Glättung von Datenströmen, die nach einem asynchronen Übertragungsverfahren übertragen werden**
Method for monitoring and smoothing asynchronously transmitted data streams
Procédé de surveillance et de lissage de flux de données transmis de manière asynchrone

(43) Veröffentlichungstag der Anmeldung: 12.08.1992
(73) Patentinhaber: SIEMENS AKTIENGESELLSCHAFT, 80333 München (DE); ROKE MANOR RESEARCH LIMITED, Romsey, Hampshire, SO51 0ZN (GB)
(72) Erfinder: Wallmeier, Eugen Bernhard, Dr. rer. nat., W-8000 München 70 (DE); Worster, Thomas, W-8000 München 70 (DE)

(56) Entgegenhaltungen:
- WO-A-90/11659
- IEEE JOURNAL ON SELECTED AREAS IN COMMUNICATION. vol. 5, no. 8, October 1987, NEW YORK US pages 1315 - 1326; M.G.H.KATEVENIS: 'Fast Switching and Fair Control of Congested Flow in Broadband Networks '
- IEEE GLOBAL TELECOMMUNICATIONS CONFERENCE vol. 1, December 1988, HOLLYWOD ,FL US, pages 203 - 207; G.M. WOODRUFF et al.: "A Congestion Control Framework for High-Speed Integrated Packetized Transport"

## Beschreibung

Die Erfindung betrifft ein Verfahren zur Überwachung der für Übertragungen von Nachrichtenzellen nach einem asynchronen Übertragungsverfahren im Zuge des Aufbaus von virtuellen Verbindungen festgelegten Übertragungsbitrate auf Übertragungsleitungen in einem Vermittlungssystem, insbesondere Breitbandvermittlungssystem, wobei Nachrichtenzellen, die zu einer Überschreitung einer für die zugehörige Verbindung festgelegten Übertragungsbitrate führen, verworfen werden.

In Breitbandvermittlungssystemen, die nach einem asynchronen Übertragungsverfahren arbeiten, wird bekanntlich im Zuge des Aufbaus von virtuellen Verbindungen unter anderem jeweils zwischen einer Teilnehmerstelle und dem Breitbandvermittlungsknoten eine jeweilige maximale Übertragungsbitrate festgelegt, die beispielsweise durch eine bestimmte Anzahl von Nachrichtenzellen konstanter Länge pro Zeiteinheit gegeben sein kann. Zur Überwachung der festgelegten Übertragungsbitrate sind an den Zugangsstellen eines solchen Vermittlungsnetzes Überwachungseinrichtungen vorgesehen, die in der Fachliteratur allgemein mit Policing-Einrichtungen bezeichnet werden.
Aus einem Aufsatz in "International Zürich Seminar on Digital Communications", März 1986, "New Directions in Communications" A3.1 bis A3.8, von J.B. Turner ist es bekannt, in einem Vermittlungsknoten eines Breitbandvermittlungssystems jeder damit verbundenen Teilnehmereinrichtung einen Vorwärts-Rückwärts-Zähler zuzuordnen, welcher die von der jeweiligen Teilnehmereinrichtung gesendeten Nachrichtenzellen zählt und den momentanen Zählerstand entsprechend der von der jeweiligen Teilnehmereinrichtung festgelegten Übertragungsgeschwindigkeit zu bestimmten Zeitpunkten erniedrigt. Überschreitet dabei der momentane Zählerstand einen von der jeweiligen Teilnehmereinrichtung vorgebbaren Wert, so erkennt der Vermittlungsknoten eine Überlast ("Leaky-Bucket-Verfahren").
Beim Zugriff auf eine einer Mehrzahl von Teilnehmereinrichtungen gemeinsame Zubringerleitung, die beispielsweise eine private Nebenstellenanlage, an die die Teilnehmereinrichtungen angeschlossen sind, mit dem Breitbandvermittlungssystem verbindet, kann es trotz Einhaltung der festgelegten Übertragungsbitrate durch die Teilnehmerendeinrichtung zu vorübergehenden Überschreitungen der festgelegten Übertragungsbitrate an der Zugangsstelle des Breitbandvermittlungssystems kommen. Eine Erhöhung der teilnehmerindividuellen Übertragungsbitrate an der Zugangsstelle eines Breitbandvermittlungssystems kann daraus resultieren, daß zwei Teilnehmereinrichtungen gleichzeitig auf die gemeinsame Zubringerleitung zugreifen wollen und dadurch einen Zugriffskonflikt verursachen, der dadurch gelöst wird, daß einzelne Nachrichtenzellen verzögert werden, so daß die einer verzögerten Nachrichtenzelle nachfolgende Nachrichtenzelle einer betroffenen virtuellen Verbindung in einem zeitlich kürzeren Abstand erscheint, als dies der bei Verbindungsaufbau vereinbarten und von dem betroffenen Teilnehmerendgerät eingehaltenen Übertragungsbitrate entspricht. Daraus folgt, daß eine an der Zugangsstelle des Breitbandvermittlungssystems angeordnete verbindungsindividuelle Policing-Einrichtung, die nach dem herkömmlichen Leaky-Bucket-Verfahren arbeitet, vorübergehende kurzzeitige Überschreitungen der jeweils vereinbarten Übertragungsbitrate, die aus dem Jitter auf der Zubringerleitung herrühren können, tolerieren muß. Ein solches Toleranzverhalten von herkömmlichen Policing-Einrichtung gegenüber kurzzeitigen Überschreitungen der verbindungsindividuellen festgelegten Übertragungsbitrate könnte indessen in mißbräuchlicher Weise dahingehend ausgenutzt werden, daß von einer Teilnehmerendeinrichtung zumindest eine begrenzte Anzahl von Nachrichtenzellen in schnellerer Folge, als dies der vereinbarten Übertragungsbitrate entspricht, übertragen werden, ohne daß die Policing-Einrichtung am Eingang des Breitbandvermittlungssystems anspricht, womit die Leistungsfähigkeit des Breitbandvermittlungssystems insgesamt beeinträchtigt würde.

Die Erfindung stellt sich die Aufgabe, ein Verfahren anzugeben, das es ermöglicht, einen Datenstrom, der Nachrichtenzellen von einer Vielzahl von virtuellen Verbindungen aufweisen kann und der mit verbindungsindividuellem Jitter behaftet sein kann so zu behandeln, daß die verbindungsindividuell festgelegte Übertragungsbitrate strikt begrenzt wird und eventuell vorhandener verbindungsindividueller Jitter ausgeglichen wird.

Diese Aufgabe wird bei einem gattungsgemäßen Verfahren dadurch gelöst, daß für jede Nachrichtenzelle in Abhängigkeit von der für die zugehörige Verbindung festgelegten Übertragungsbitrate und dem zeitlichen Abstand der zur gleichen Verbindung gehörenden, zur Weiterleitung bestimmten Nachrichtenzellen ein Zeitschlitz ermittelt wird, in dem die betreffende Nachrichtenzelle weitergeleitet werden soll,
wobei Nachrichtenzellen, für die ein Zeitschlitz ermittelt wird, der einen vorgegebenen zeitlichen Abstand zu dem aktuellen Zeitpunkt überschreitet, verworfen werden, und wobei jede nichtverworfene Nachrichtenzelle in Verbindung mit einer Markierung, die dem jeweiligen ermittelten Zeitschlitz entspricht, abgespeichert wird, wobei Nachrichtenzellen, die zu einunddemselben Zeitschlitz weitergeleitet werden sollen, zu einer Ausleseliste verbunden werden,
woraufhin die betreffende Nachrichtenzelle in dem markierten Zeitschlitz bzw. die Nachrichtenzellen der betreffenden Ausleseliste in dem markierten Zeitschlitz und einer entsprechenden Anzahl darauffolgender Zeitschlitze weitergeleitet wird bzw. werden.

Das erfindungsgemäße Verfahren, das übrigens die Bildung von verbindungsindividuellen Warteschlangen, deren zeitgerechtes Auslesen bei der heute üblichen Nachrichtenzellenfolgerate ohnehin als kaum durchführbar erscheint, vermeidet, stellt trotz der Toleranz gegenüber Schwankungen in der Nachrichtenzellenfolgefrequenz von ankommenden Nachrichtenzellen einer jeweiligen virtuellen Verbindung sicher, daß die Folge von abgehenden Nachrichtenzellen die entsprechende, bei Verbindungsaufbau festgelegte Übertragungsbitrate nicht überschreitet und ermöglicht so bei Anwendung an der Zugangsstelle zu einem Breitbandvermittlungssystem einen zuverlässigen Schutz des Breitbandvermittlungssystems vor Überlast.

Weitere vorteilhafte Ausgestaltung der Erfindung ergeben sich aus den Unteransprüchen.
In besonderer Ausgestaltung der Erfindung werden die jeweils zu einer Ausleseliste verbundenen Nachrichtenzellen beginnend mit der zuletzt mit der Ausleseliste verbundenen Nachrichtenzelle weitergeleitet.
Diese Maßnahme bringt den Vorteil mit sich, daß zu einer jeweiligen virtuellen Verbindung gehörende Nachrichtenzellen, die in gleichmäßiger Folge eintreffen und Nachrichtenzellen, die beispielsweise aufgrund eines Zugriffskonflikts verzögert eintreffen und damit erst kurz vor Beginn der Weiterleitung der zu einer jeweiligen Ausleseliste verbundenen Nachrichtenzellen in diese Ausleseliste aufgenommen werden, mit möglichst geringer, durch das Weiterleiten der Nachrichtenzellen der Ausleseliste bedingter Verzögerung weitergeleitet werden.

Die Erfindung wird im folgenden in zu ihrem Verständnis erforderlichem Umfang anhand von Zeichnungen beschrieben. Dabei zeigen
- FIG 1: ein Blockschaltbild eines Ausführungsbeispiels einer das erfindungsgemäße Verfahren realisierenden Schaltungsanordnung und
- FIG 2: nähere Einzelheiten des in FIG 1 mit CBM bezeichneten Blockes
- FIG 3: zeigt eine zeitliche Darstellung typischer Ablaufe während eines Nachrichtenzellenzyklus' bei dem erfindungsgemäßen Verfahren, und
- FIG 4: verdeutlicht Vorgänge beim Weiterleiten von Nachrichtenzellen.

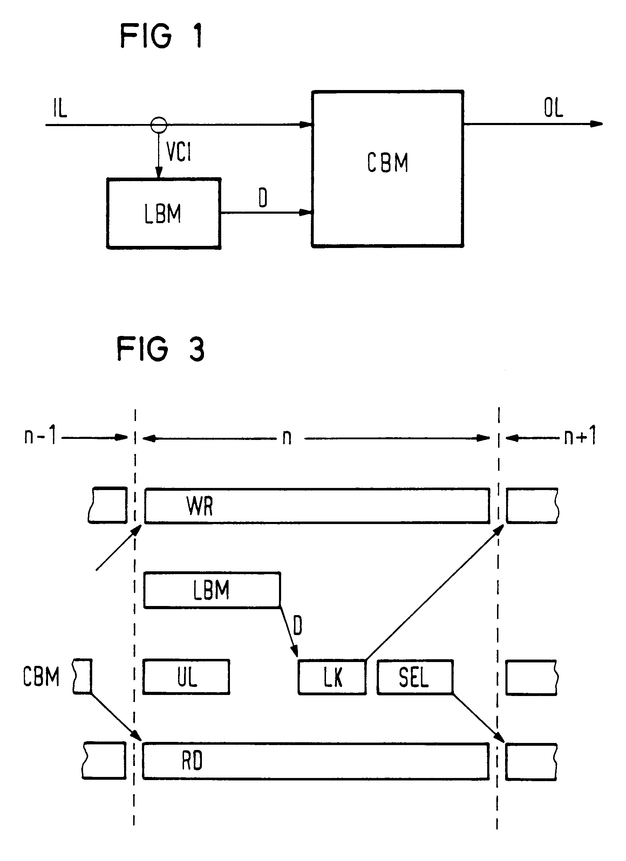

In FIG 1 ist schematisch eine Schaltungsanordnung dargestellt, der über eine Eingangsleitung IL Nachrichtenzellen zugeführt werden und die Nachrichtenzellen auf eine, die gleiche nominelle Übertragungsbitrate wie die Eingangsleitung aufweisende Ausgangsleitung OL weiterleitet. Bei der Eingangsleitung kann es sich dabei um eine Zubringerleitung von einer privaten Nebenstellenanlage mit einer Vielzahl von Teilnehmereinrichtungen zu einem Breitbandvermittlungssystem handeln, über die eine Vielzahl von virtuellen Verbindungen eingerichtet sein können. Die Ausgangsleitung kann durch eine Zugangsleitung zu einem Breitbandvermittlungssystem gegeben sein.
Von jeder auf der Eingangsleitung ankommenden Nachrichtenzelle, die bekanntlich einen Kopfteil und einen Informationsteil aufweist, wird eine Kopie des jeweiligen, die virtuelle Kanalnummer VCI enthaltenden Kopfteils einer Auswerteeinrichtung LBM zugeführt, während die gesamte Nachrichtenzelle einer nicht näher dargestellten Empfangseinrichtung (Receiver) einer Speichereinrichtung CBM zugeführt wird. Die Auswerteeinrichtung LBM ermittelt für jede Nachrichtenzelle in Abhängigkeit von der für die zugehörige Verbindung festgelegten Übertragungsbitrate und dem zeitlichen Abstand der zur gleichen Verbindung gehörenden, bereits zur Weiterleitung bestimmten Nachrichtenzellen einen Zeitschlitz, in dem die betreffende Nachrichtenzelle weitergeleitet werden soll. Ein jeweiliger Zeitschlitz kann mit Hilfe einer besonderen Leaky-Bucket-Prozedur ermittelt werden, die die für jede virtuelle Verbindung in verbindungsindividuellen Speicherplätzen abgespeicherten aktuellen Leaky-Bucket-Größen auswertet. Diese Größen betreffen den maximalen Füllstand, den aktuellen Füllstand, die Abflußrate, die einer Nachrichtenzelle entsprechende Zuflußmenge und den Zeitpunkt der Ankunft der vorausgegangenen, zur Weiterleitung bestimmten zu der betrachteten virtuellen Verbindung gehörenden Nachrichtenzelle.
Für jede auf der Eingangsleitung IL ankommende Nachrichtenzelle wird für die zugehörige virtuelle Verbindung ein neuer Füllstand des Leaky-Bucket berechnet, indem der zuletzt ermittelte Füllstand um die seitdem ausgelaufene Abflußmenge reduziert wird; aus diesem neuen Füllstand wird durch Division mit der zugehörigen Abflußrate, die umso größer ist, je größer die für die jeweilige Verbindung festgelegte Übertragungsbitrate ist, eine Information D ermittelt, die ein Maß dafür angibt, nach welchem zeitlichen Abstand zum aktuellen Zeitpunkt und damit in welchem Zeitschlitz die betreffende Nachrichtenzelle auf die Ausgangsleitung weitergeleitet werden soll. Der aktuelle Füllstand des betreffenden Leaky-Bucket ergibt sich dann durch Erhöhung des neuen Füllstandes um die einer Nachrichtenzelle entsprechende Zuflußmenge. Wenn der so ermittelte aktuelle Füllstand den maximalen Füllstand des Leaky-Bucket überschreitet, was gleichbedeutend mit der Überschreitung einer vorgebbaren Zwischenspeicherungsdauer wäre, wird für die ermittelte Information D ein bestimmter Wert, beispielsweise ZERO gesetzt, der angibt, daß die gerade behandelte Nachrichtenzelle verworfen wird. Wenn der so ermittelte aktuelle Füllstand den maximalen Füllstand nicht überschreitet, wird der aktuelle Füllstand und der aktuelle Zeitpunkt, zu dem die gerade behandelte Nachrichtenzelle eingetroffen ist, in die verbindungsindividuellen Speicherplätze der Auswerteeinrichtung LBM übernommen.
Die Leaky-Bucket-Prozedur stellt sicher, daß jeder Nachrichtenzelle ein mit Hilfe der Information D berechneter Zeitschlitz zugeordnet wird, der einen der für die zugehörige virtuelle Verbindung festgelegten Übertragungsbitrate entsprechenden zeitlichen Abstand zu der zuletzt zur Weiterleitung bestimmten, zur gleichen Verbindung gehörenden Nachrichtenzelle nicht unterschreitet.
Die Information D wird über eine Verbindung der Speichereinrichtung CBM zugeführt.
Wird für eine gerade behandelte Nachrichtenzelle der Wert ZERO gesetzt, so wird sie verworfen. Wird für eine gerade behandelte Nachrichtenzelle eine von ZERO unterschiedliche Information D ermittelt, so wird diese Nachrichtenzelle nach Maßgabe der Information D mit einer Markierung versehen, die angibt, zu welchem Zeitschlitz diese Nachrichtenzelle weitergeleitet werden soll.

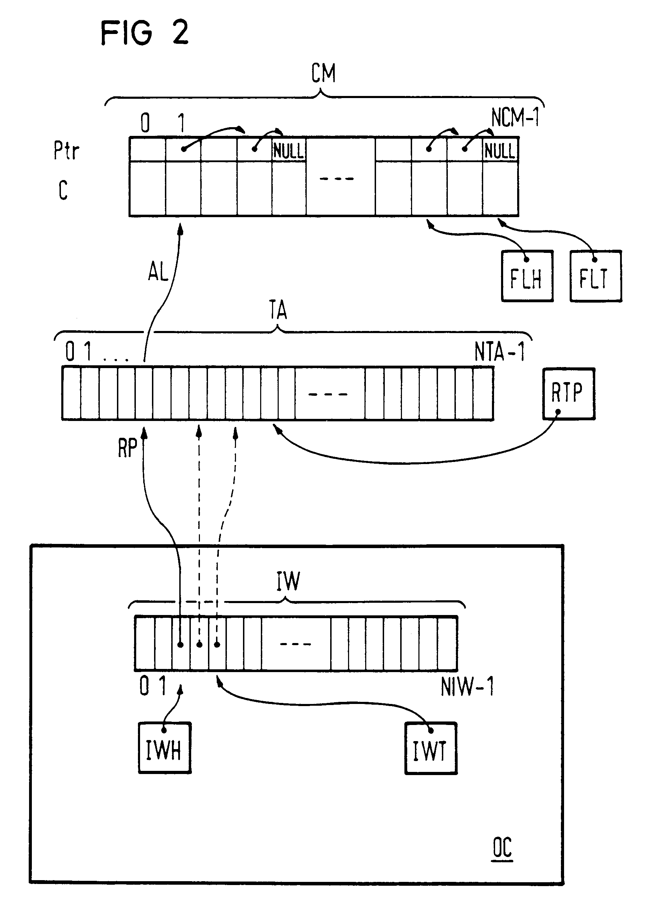

Die Speichereinrichtung CBM in FIG 2 weist einen Nachrichtenzellenspeicher CM mit einer Vielzahl von Speicherzeilen 0...NCM-1 auf, auf die wahlfrei zugegriffen werden kann. In jeder dieser Speicherzeilen können eine ganze Nachrichtenzelle C und ein Pointer Ptr abgespeichert werden. Mit Hilfe eines solchen Pointers Ptr ist es möglich, eine andere Speicherzeile des Nachrichtenzellenspeichers CM zu bezeichnen. Mit Hilfe dieser Pointer können eine Mehrzahl von Speicherzeilen zu einer Ausleseliste verbunden werden. Dabei kann ein Pointer, der einen bestimmten Wert, beispielsweise NULL aufweist, das Ende einer Ausleseliste bezeichnen. In dem Ausführungsbeispiel werden Nachrichtenzellen, die zu einunddemselben Zeitschlitz weitergeleitet werden sollen, zu einer Ausleseliste verbunden, indem ein jeweiliger Pointer Ptr, der in der gleichen Speicherzelle des Nachrichtenzellenspeichers CM abgespeichert ist, wie die Nachrichtenzelle, die als bislang letzte Nachrichtenzelle in dem betreffenen Zeitschlitz weitergeleitet werden soll, auf die Adresse der Speicherzelle des Nachrichtenzellenspeichers CM verweist, in dem sich die Nachrichtenzelle befindet, die als vorläufig letzte Nachrichtenzelle in dem betreffenden Zeitschlitz weitergeleitet werden soll.
Weiter können sämtliche nicht mit Nachrichtenzellen belegten Speicherzeilen mit Hilfe von Pointern, die jeweils die nächste nicht belegte Speicherzeile bezeichnen, zu einer Freiliste zusammengefaßt werden, die angibt, welche Speicherzeilen noch mit Nachrichtenzellen beschrieben werden können. Weiter können zwei zusätzliche, mit dem Nachrichtenzellenspeicher CM assoziierte Zeiger FLH bzw. FLT vorgesehen sein, die den Anfang bzw. das Ende der Freiliste bezeichnen.
Weiter ist in der Speichereinrichtung CBM eine Speicheranordnung TA enthalten, die eine Vielzahl von Speicherplätzen 0...NTA-1 aufweist. Diese Speicherplätze dienen der Aufnahme von jeweiligen Markierungen, die entsprechende Speicherzeilen im Nachrichtenzellenspeicher CM über eine Adressierungsleitung AL zu adressieren vermögen. Die Abspeicherung einer Nachrichtenzelle in Verbindung mit einer Markierung, die einem jeweiligen Zeitschlitz entspricht, erfolgt in dem Ausführungsbeispiel dadurch, daß die Adresse der Speicherzeile des Nachrichtenzellenspeichers CM, in der die betreffende Nachrichtenzelle abgespeichert ist, in einem den jeweiligen Zeitschlitz entsprechenden Speicherplatz eines zyklisch angesteuerten Speichers TA abgespeichert wird.
Die Speicherplätze der Speicheranordnung TA werden zyklisch der Reihe nach durch einen Echtzeitzeiger RTP angesteuert, wobei die Speicheranordnung TA als Zeitachse betrachtet werden kann. Der Echtzeitzeiger wird mit jedem Nachrichtenzellenzyklus, der beispielsweise 2,8 »s betragen möge, weitergeschaltet.
Der Echtzeitzeiger RTP kann beispielsweise durch einen, mit einem Taktsignal angesteuerten Zähler gegeben sein, der ebensoviele Zustände einzunehmen vermag, wie die Speicheranordnung TA Speicherplätze aufweist, wobei jeweilige Zustände entsprechende Speicherplätze zu adressieren vermögen. Die während eines aktuellen Ansteuerzyklus' durch den Echtzeitzeiger RTP angesteuerten, entsprechenden Zeitschlitzen zugeordneten Speicherplatze der Speicheranordnung TA bestimmen durch die in ihnen jeweils abgespeicherte Markierung diejenigen in dem Nachrichtenzellenspeicher CM abgespeicherten Nachrichtenzellen, die unverzüglich weitergeleitet werden sollen. Die Verwaltung von Markierungen, die zur unmittelbaren Weiterleitung bestimmte Nachrichtenzellen oder Ausleselisten bezeichnen, erfolgt mit Hilfe einer Steuereinrichtung OC. Die Steuereinrichtung OC weist einen mit einer Vielzahl von Speicherelementen 0...NIW-1 bebildeten FIFO-Speicher IW auf. In die Speicherelemente des FIFO-Speichers IW werden jeweils die Adressen der Speicherplätze der Speicheranordnung TA eingeschrieben, die Markierungen von unmittelbar weiterzuleitenden Nachrichtenzellen oder Ausleselisten enthalten. Zur Kennzeichnung des ersten bzw. des letzten im FIFO-Speicher belegten Speicherelementes können mit IWH bzw. IWT bezeichnete Zeiger vorgesehen sein. Die jeweilige, in dem ersten Speicherelement enthaltene Adresse steuert über einen Lesezeiger RP einen Speicherplatz der Speicheranordnung TA an, wobei die darin enthaltene Markierung über die Adressierungsleitung AL die Speicherzeile des Nachrichtenzellenspeichers CM einer gerade weiterzuleitenden Nachrichtenzelle ansteuert. Der Lesezeiger RP verweist solange auf einen, einem jeweiligen Zeitschlitz entsprechenden Speicherplatz der Speicheranordnung TA, bis sämtliche Nachrichtenzellen, die zu diesem Zeitschlitz weitergeleitet werden sollen, weitergeleitet sind.
Bei dem Ausführungsbeispiel ist vorgesehen, daß die Bezeichnung von mit Speicherzeilen-Adressen belegten Speicherplätzen des Speichers TA, deren Inhalt bei der zyklischen Ansteuerung des jeweiligen Speicherplatzes aufgrund einer noch andauernden Abarbeitung vorangehender Speicherplätze noch nicht bearbeitet werden kann, in einen FIFO-Speicher IW abgespeichert werden, dessen Inhalt vorrangig gegenüber dem Inhalt des Speichers TA abgearbeitet wird.

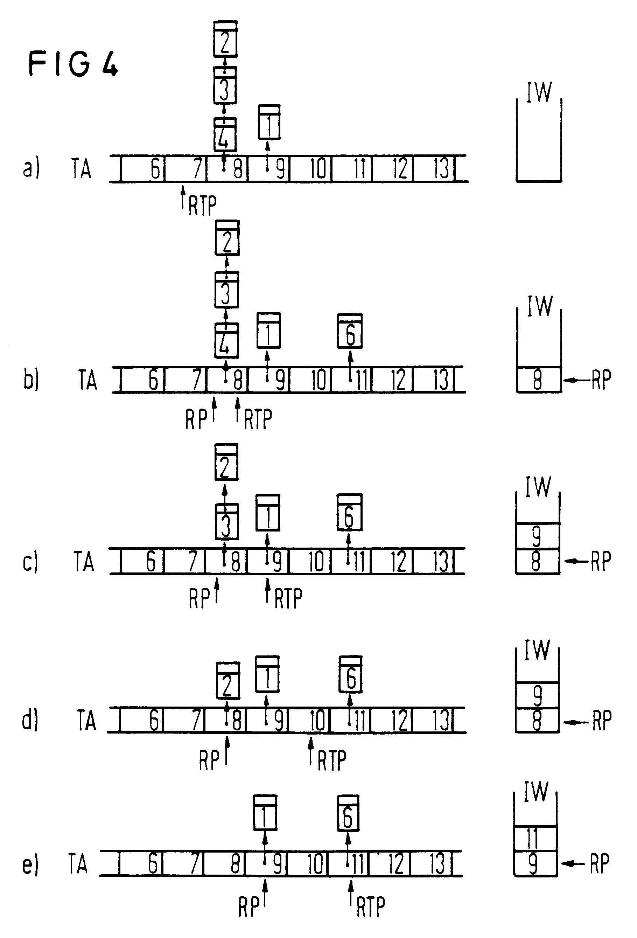

Im folgenden wird die Funktion einer Schaltungsanordnung, die nach dem erfindungsgemäßen Verfahren arbeitet, unter Bezugnahme auf die oben beschriebenen Figuren anhand von FIG 3 beschrieben. FIG 3 gibt ein Beispiel für eine zeitliche Darstellung von während eines mit n bezeichneten Nachrichtenzyklus' in einer Schaltungsanordnung, die nach dem erfindungsgemäßen Verfahren arbeitet, ablaufenden Vorgänge.
In Zeile RD ist dargestellt, daß eine Nachrichtenzelle, die bereits während des vorangegangenen Nachrichtenzellenzyklus' n-1 dazu bestimmt wurde, annähernd während des gesamten betrachteten Nachrichtenzellenzyklus' n auf die Ausgangsleitung OL weitergeleitet wird.
In Zeile WR ist dargestellt, daß eine gerade auf der Eingangsleitung IL ankommende, sequenziell übertragene Nachrichtenzelle in die Speicherzeile des Nachrichtenzellenspeichers CM geschrieben wird, auf die gerade der Pointer FLH verweist. Sobald der Kopfteil der gerade ankommenden Nachrichtenzelle mit der virtuellen Kanalnummer VCI angekommen ist, wird, wie in Zeile LBM dargestellt, für diese Nachrichtenzelle in der Auswerteeinrichtung LBM die Information D ermittelt.
Am Ende der weiter oben beschriebenen in der Auswerteeinrichtung LBM durchgeführten Leaky-Bucket-Prozedur wird die ermittelte Information D an eine weiter unten näher beschriebene Prozedur LK weitergegeben. Wie aus Zeile CBM ersichtlich, laufen während eines Nachrichtenzellenzyklus' nacheinander mit UL, LK und SEL bezeichnete Prozeduren ab. Mit Hilfe der Prozedur UL wird für den Fall, daß während des akutellen Nachrichtenzellenzyklus' eine Nachrichtenzelle weitergeleitet wird, die zugehörige Speicherzeile des Nachrichtenzellenspeichers CM von dem diesen Nachrichtenzellenzyklus bezeichnenden Zeitschlitz entkoppelt und diese freigewordene Speicherzeile an das Ende der Freiliste angehängt, wobei der das Ende des Freiliste bezeichnende Pointer FLT nunmehr auf die neu hinzugekommene Speicherzeile verweist.

Für den Fall, daß während des aktuellen Zellenzyklus eine Nachrichtenzelle empfangen wird und die Auswerteeinrichtung LBM die angekommene Nachrichtenzelle nicht zum Verwurf bestimmt, wird die von der Auswerteeinrichtung LBM gelieferte Information D der Prozedur LK zugeführt. Mit Hilfe der Information D wird ausgehend von dem gerade durch den Echtzeitzeiger gegebenen Zeitpunkt ein Zeitschlitz bestimmt, zu dem die betreffende Nachrichtenzelle weitergeleitet werden soll.

Mit Hilfe der Prozedur LK wird die Speicherzeile des Nachrichtenzellenspeichers CM, auf die während des aktuellen Nachrichtenzellenzyklus' der Pointer FLH verweist und in die die gerade ankommende Nachrichtenzelle eingeschrieben wird, mit der Markierung verbunden, die dem Zeitschlitz entspricht, der für die vorliegende Nachrichtenzelle ermittelt wurde. In dem Ausführungsbeispiel ist dabei vorgesehen, daß entweder, wenn es sich um die bislang einzige Nachrichtenzelle handelt, die zu einem bestimmten Zeitschlitz ausgelesen werden soll, in dem diesem Zeitschlitz entsprechenden Speicherplatz der Speicheranordnung TA eine Markierung gesetzt wird, die auf diese Speicherzeile des Nachrichtenzellenspeichers CM verweist oder, wenn bereits mindestens eine Nachrichtenzelle vorhanden ist, die zu dem bestimmten Zeitschlitz ausgelesen werden soll, daß die betreffende Speicherzeile mit Hilfe eines Pointers mit der Ausleseliste der Speicherzeilen verbunden wird, die zu diesem Zeitschlitz ausgelesen werden sollen. Schließlich verweist der Pointer FLH auf die Speicherzeile des Nachrichtenzellenspeichers CM, in die während des nächsten Nachrichtenzellenzyklus' geschrieben werden kann.

Mit Hilfe der Prozedur SEL wird für den Fall, daß während des darauffolgenden Nachrichtenzellenzyklus' eine Nachrichtenzelle weitergeleitet werden soll, die Adresse der Speicherzeile des Nachrichtenzellenspeichers CM bestimmt, aus der die betreffende Nachrichtenzelle ausgelesen werden soll.

Aus der obigen Beschreibung und FIG 3 geht hervor, daß in jedem Nachrichtenzellenzyklus bereits festgelegt ist, in welche Speicherzeile der Speicheranordnung CM während des nächsten Nachrichtenzellenzyklus' geschrieben werden kann bzw. aus welcher Speicherzeile des Nachrichtenzellenspeichers CM gelesen werden soll. Weiter geht aus der Beschreibung hervor, daß eine in dem aktuellen Nachrichtenzellenzyklus ankommende Nachrichtenzelle bereits in dem darauffolgenden Nachrichtenzellenzyklus weitergeleitet werden kann, was gleichbedeutend damit ist, daß die durch die Anwendung des erfindungsgemäßen Verfahrens bedingte Verzögerung von Nachrichtenzellen die Dauer eines Nachrichtenzellenzyklus' beträgt.

FIG 4 gibt ein Beispiel für fünf aufeinanderfolgende mit a) bis e) bezeichneten Nachrichtenzellenzyklen, die zu entsprechenden Zeitschlitzen korrespondieren, welche Vorgänge bei dem erfindungsgemäßen Verfahren ablaufen können. Von dem Speicher TA sind in FIG 4 lediglich die Speicherplätze 6 bis 13 dargestellt, die zu den Nachrichtenzellenzyklen 6 bis 13 korrespondieren. Die Speicherplätze des Speichers TA werden zyklisch, mit jedem Nachrichtenzellenzyklus fortschreitend, durch den Echtzeitzeiger RTP angesteuert. Demnach kann die zeitliche Abfolge von Ansteuerungen der Speicherplätze des Speichers TA als Zeitachse betrachtet werden.
Wie aus Zeile a) ersichtlich, sollen zu dem in der Speicheranordnung TA mit der Ziffer 8 bezeichneten Zeitschlitz die mit 4, 3 und 2 bezeichneten Nachrichtenzellen, die zu einer Ausleseliste verbunden sind, und zu dem mit der Ziffer 9 bezeichneten Zeitschlitz eine mit der Ziffer 1 bezeichnete Nachrichtenzelle weitergeleitet werden. Bei den Zeitschlitzen 8 und 9 sind jeweilige Markierungen gesetzt, die besagen, daß zu diesen Zeitschlitzen mindestens eine Nachrichtenzelle weitergeleitet werden soll. Der FIFO-Speicher IW möge zunächst unbelegt sein.
In der mit b) bezeichneten Darstellung ist der Echtzeitzeiger RTP auf den Zeitschlitz 8 fortgeschritten. Zu diesem Zeitpunkt möge eine mit der Ziffer 6 bezeichnete Nachrichtenzelle in eine hier nicht dargestellte Speicherzeile des Nachrichtenzellenspeichers CM eingeschrieben worden sein, die zum Zeitschlitz 11 weitergeleitet werden soll und auf die dazu mit Hilfe der Prozedur LK beim Zeitschlitz 11 eine Markierung gesetzt wird. Bei der aktuellen Ansteuerung des Zeitschlitzes 8 wird festgestellt, daß bei diesem Zeitschlitz eine Markierung gesetzt ist. In den Speicher IW wird die Ziffer 8 für den Zeitschlitz 8 eingeschrieben. Der Lesezeiger RP, der das erste Element in dem als FIFO organisierten Speicher IW betrachtet, verweist gerade auf den Zeitschlitz 8 und gibt damit an, daß zu diesem Zeitschlitz noch mindestens eine Nachrichtenzelle ausgelesen werden soll. In dem betrachteten Fall wird gerade die mit der Ziffer 4 bezeichnete Nachrichtenzelle mit Hilfe der Prozedur SEL für die Weiterleitung während des darauffolgenden Nachrichtenzellenzyklus ausgewählt.

Bei dem in Zeile c) dargestellten Nachrichtenzellzyklus ist der Echtzeitzeiger RTP auf den Zeitschlitz 9 fortgeschritten. Bei der Ansteuerung des dem Zeitschlitz 9 entsprechenden Speicherplatzes wird festgestellt, daß mindestens eine Nachrichtenzelle - in dem gegebenen Fall die mit der Ziffer 1 bezeichnete Nachrichtenzelle - weitergeleitet werden soll, wozu die auf den Zeitschlitz 9 verweisende Ziffer 9 in den Speicher IW aufgenommen wird. Während des Zeitschlitzes 9 wird die in Zeile b) dargestellte Nachrichtenzelle 4 auf die Ausgangsleitung weitergeleitet, wobei die Speicherzeile des Nachrichtenzellenspeichers CM, in der die Nachrichtenzelle 4 abgespeichert war, mit Hilfe der Prozedur UL aus der zugehörigen Ausleseliste entfernt und an das Ende der Freiliste angehängt wird; weiter wird die Nachrichtenzelle 3 mit Hilfe der Prozedur SEL für die Weiterleitung während des nächsten Zeitschlitzes ausgewählt.
Bei dem in Zeile d) dargestellten Nachrichtenzellenzyklus ist der Echtzeitzeiger RTP auf den Zeitschlitz 10 fortgeschritten. Bei dem angesteuerten Zeitschlitz 10 ist keine Markierung gesetzt und somit auch kein Eintrag in den Speicher IW vorzunehmen. Der Lesezeiger RP verweist weiterhin darauf, daß noch mindestens eine zum Zeitschlitz 8 zur Weiterleitung bestimmte Nachrichtenzelle vorhanden ist. Die während dem Zeitschlitz 9 ausgewählte Nachrichtenzelle 3 wird nunmehr während des Zeitschlitzes 10 weitergeleitet und die Nachrichtenzelle 2 zur Weiterleitung während des darauffolgenden Nachrichtenzellenzyklusausgewählt. Bei dem in Zeile e) dargestellten Nachrichtenzellenzyklus ist der Echtzeitzeiger RTP auf den Zeitschlitz 11 fortgeschritten. Dabei wird festgestellt, daß in Zeitschlitz 11 eine Markierung auf mindestens eine - im betrachteten Fall die Nachrichtenzelle 6 - verweist, die weitergeleitet werden soll und somit die den Zeitschlitz 11 bezeichnende Ziffer 11 in den Speicher IW übernommen. Die Nachrichtenzelle 2, die während des Zeitschlitzes 10 ausgewählt wurde, wird auf die Ausgangsleitung weitergeleitet, wobei mit Hilfe der Prozedur UL die auf diese Ausleseliste vorweisende Markierung in dem Speicher TA gelöscht wird. Nachdem nun sämtliche Nachrichtenzellen, die zum Zeitschlitz 8 weitergeleitet werden sollten, abgearbeitet sind, wird die auf den Zeitschlitz 8 verweisende Ziffer 8 aus dem Speicher IW entfernt und der Lesezeiger RP verweist nunmehr auf den Zeitschlitz 9. Die Nachrichtenzelle 1, auf die die Markierung im Zeitschlitz 9 verweist, wird mit Hilfe der Prozedur SEL zum Weiterleitung während des darauffolgenden Nachrichtenzellenzyklus' ausgewählt.
Während des nächsten, nicht mehr dargestellten Nachrichtenzellenzyklus' wäre der Echtzeitzeiger auf den mit Zeitschlitz 12 bezeichneten Speicherplatz des Speichers TA fortgeschritten, die auf den Zeitschlitz 9 verweisende Ziffer 9 wäre aus dem Speicher IW entfernt worden und der Lesezeiger RP würde auf den Zeitschlitz 11 verweisen, wodurch die Nachrichtenzelle 6 mit Hilfe der Prozedur SEL zur Weiterleitung ausgewählt würde.
Während des Nachrichtenzellenzyklus' 13 schließlich, würde die Nachrichtenzelle 6 auf die Ausgangsleitung weitergeleitet und der Speicher IW wäre leer.
Bei einem nachfolgenden Zeitschlitz, bei dem eine Markierung auf wenigstens eine weiterzuleitende Nachrichtenzelle verweist, würde der Lesezeiger RP und der Echtzeitzeiger RTP gleichzeitig auf diesen Zeitschlitz verweisen.

Gemäß einer besonderen Weiterbildung des erfindungsgemäßen Verfahrens werden zu einer Ausleseliste verbundene Nachrichtenzellen, die zu einunddemselben Zeitschlitz weitergeleitet werden sollen, beginnend mit der zuletzt mit der Ausleseliste verbundenen Nachrichtenzellen weitergeleitet.
Diese Maßnahme bevorzugt solche Nachrichtenzellen, die beispielsweise aufgrund eines Zugriffskonflikts verzögert wurden und für die deshalb kurze Zwischenspeicherungsdauern ermittelt wurden. Durch diese Maßnahme werden auch Nachrichtenzellen von Verbindungen bevorzugt, die Nachrichtenzellen unter Einhaltung der der festgelegten Übertragungsbitrate entsprechenden Nachrichtenzellenfolge übertragen und deren Nachrichtenzellen damit typischerweise kurze Zwischenspeicherungsdauern aufweisen, wobei sie relativ spät mit einer jeweiligen Ausleseliste verbunden werden. Aus den gleichen Gründen werden durch die angegebene Maßnahme auch Nachrichtenzellen von Verbindungen, die die für sie festgelegte Übertragungsbitrate nicht voll ausschöpfen und deren Nachrichtenzellen in gleichmäßiger Nachrichtenzellenfolge erscheinen, bevorzugt weitergeleitet. Dagegen werden durch diese Maßnahme Nachrichtenzellen von Verbindungen, die vorübergehend die für sie festgelegte Übertragungsbitrate überschreiten relativ zeitig einem jeweiligen in fernerer Zukunft anzusteuernden Zeitschlitz zugeordnet, zu dem sie ausgelesen werden sollen, was gleichbedeutend damit ist, daß sämtliche später mit einer solchen Nachrichtenzelle zu einer jeweiligen Ausleseliste verbundenen Nachrichtenzellen zuerst ausgelesen werden.

Es sei an dieser Stelle erwähnt, daß durch geeignete Dimensionierung einer Realisierung des erfindungsgemäßen Verfahrens sichergestellt ist, daß die Reihenfolge von Nachrichtenzellen von jeweiligen Verbindungen eingehalten wird.

Schließlich sei noch darauf hingewiesen, daß das erfindungsgemäße Verfahren vorteilbringend im Zuständigkeitsbereich eines Teilnehmers angewendet werden kann, der von einer Teilnehmereinrichtung mit stark schwankener Nachrichtenzellenfolgerate abgegebene Nachrichtenzellen, deren Übertragung nicht zeitkritisch ist, übertragen möchte. Solche Teilnehmer können dabei den Gebührenvorteil einer Verbindung mit einer der mittleren Nachrichtenzellenfolgerate entsprechenden Übertragungsbitrate gegenüber einer Verbindung mit einer der maximalen Nachrichtenzellenfolgerate entsprechenden Übertragungsbitrate ausnutzen.

## Patentansprüche

1. Verfahren zur Überwachung der für Übertragungen von Nachrichtenzellen nach einem asynchronen Übertragungsverfahren im Zuge des Aufbaus von virtuellen Verbindungen festgelegten Übertragungsbitrate auf Übertragungsleitungen in einem Vermittlungssystem, insbesondere Breitbandvermittlungssystem, wobei Nachrichtenzellen, die zu einer Überschreitung einer für die zugehörige Verbindung festgelegten Übertragungsbitrate führen, verworfen werden,
**dadurch gekennzeichnet,**
daß für jede Nachrichtenzelle in Abhängigkeit von der für die zugehörige Verbindung festgelegten maximalen Übertragungsbitrate und dem zeitlichen Abstand der zur gleichen Verbindung gehörenden, zur Weiterleitung bestimmten Nachrichtenzellen ein Zeitschlitz ermittelt wird, in dem die betreffende Nachrichtenzelle weitergeleitet werden soll,
wobei Nachrichtenzellen, für die ein Zeitschlitz ermittelt wird, der einen vorgegebenen zeitlichen Abstand zu dem aktuellen Zeitpunkt überschreitet, verworfen werden, und
wobei jede nichtverworfene Nachrichtenzelle in Verbindung mit einer Markierung, die dem jeweiligen ermittelten Zeitschlitz entspricht, abgespeichert wird, wobei Nachrichtenzellen, die zu einunddemselben Zeitschlitz weitergeleitet werden sollen, zu einer Ausleseliste verbunden werden,
woraufhin die betreffende Nachrichtenzelle in dem markierten Zeitschlitz bzw. die Nachrichtenzellen der betreffenden Ausleseliste in dem markierten Zeitschlitz und einer entsprechenden Anzahl darauffolgender Zeitschlitze weitergeleitet wird bzw. werden.

2. Verfahren nach Anspruch 1,
**dadurch gekennzeichnet,**
daß der Zeitschlitz, in dem eine jeweilige Nachrichtenzelle weitergeleitet werden soll, mit Hilfe einer Leaky-Bucket-Procedur ermittelt wird, die für jede virtuelle Verbindung deren Leaky-Bucket-Größen auswertet.

3. Verfahren nach Anspruch 2,
**dadurch gekennzeichnet,**
daß die Leaky-Bucket-Größen den aktuellen Füllstand, den maximalen Füllstand, die Abflußrate, die aktuelle Zuflußmenge und den Zeitpunkt der Ankunft der vorausgegangenen zu der betrachteten virtuellen Verbindung gehörenden Nachrichtenzelle einschließen.

4. Verfahren nach einem der vorstehenden Ansprüche,
**dadurch gekennzeichnet,**
daß die nichtverworfenen Nachrichtenzellen jeweils in einer Speicherzeile eines Nachrichtenzellenspeichers (CM) mit wahlfreiem Zugriff abgespeichert werden.

5. Verfahren nach Anspruch 4,
**dadurch gekennzeichnet,**
daß die einem jeweiligen Zeitschlitz entsprechende Markierung einer jeweiligen Nachrichtenzelle durch Abspeicherung der Adresse der Speicherzeile des Nachrichtenzellenspeichers (CM), in der die betreffende Nachrichtenzelle abgespeichert ist, in einem den jeweiligen Zeitschlitz entsprechenden Speicherplatz eines zyklisch angesteuerten Speichers (TA) erfolgt.

6. Verfahren nach Anspruch 5,
**dadurch gekennzeichnet,**
daß die Bezeichnung von mit Speicherzeilen-Adressen belegten Speicherplätzen des Speichers (TA), deren Inhalt bei der zyklischen Ansteuerung des jeweiligen Speicherplatzes aufgrund einer noch andauernden Abarbeitung vorangehender Speicherplätze noch nicht bearbeitet werden kann, in einem FIFO-(First-In-First-Out)-Speicher (IW) abgespeichert werden, dessen Inhalt vorrangig gegenüber dem Inhalt des Speichers (TA) abgearbeitet wird.

7. Verfahren nach einem der Ansprüche 4 bis 6,
**dadurch gekennzeichnet,**
daß bereits während jedes Nachrichtenzellenzyklus' festgelegt wird, in welche Speicherzeile des Nachrichtenzellenspeichers (CM) im nachfolgenden Nachrichtenzellenzyklus eingeschrieben werden kann und welche Speicherzeile des Nachrichtenzellenspeichers (CM) ausgelesen werden soll.

8. Verfahren nach einem der Ansprüche 4 bis 7,
**dadurch gekennzeichnet,**
daß Nachrichtenzellen, die zu einunddemselben Zeitschlitz weitergeleitet werden sollen, zu einer Ausleseliste verbunden werden, indem ein jeweiliger Pointer (Ptr), der in der gleichen Speicherzeile des Nachrichtenzellenspeichers (CM) abgespeichert ist, wie die Nachrichtenzelle, die als bislang letzte Nachrichtenzelle in dem betreffenden Zeitschlitz weitergeleitet werden soll, auf die Adresse der Speicherzeile des Nachrichtenzellenspeichers (CM) verweist, in dem sich die Nachrichtenzelle befindet, die als vorläufig letzte Nachrichtenzelle in dem betreffenden Zeitschlitz weitergeleitet werden soll.

9. Verfahren nach einem der vorstehenden Ansprüche,
**dadurch gekennzeichnet,**
daß die jeweils zu einer Ausleseliste verbundenen Nachrichtenzellen beginnend mit der zuletzt mit der Ausleseliste verbundenen Nachrichtenzelle weitergeleitet werden.

10. Verfahren nach einem der vorstehenden Ansprüche, das bei Teilnehmereinrichtungen mit stark schwankender Nachrichtenzellenfolge zur Vergleichmäßigung der Nachrichtenzellenfolge eingesetzt wird.

## Claims

1. Method for monitoring the transmission bit rate established for transmissions of message cells according to an asynchronous transmission method in the course of the setup of virtual connections, on transmission lines in a switching system, in particular broadband switching system, in which case message cells which lead to a transmission bit rate established for the respective connection being exceeded are rejected, characterized in that a time slot is determined for each message cell as a function of the maximum transmission rate established for the respective connection and the time intervals between the message cells which are part of the same connection and are intended for forwarding, in which time slot the relevant message cell is intended to be forwarded, message cells for which a time slot is determined which exceeds a prescribed time interval with respect to the current time point being rejected, and each non-rejected message cell being stored in conjunction with a mark which corresponds to the respective determined time slot, message cells which are intended to be forwarded to the same time slot are connected to one read-out list, after which the relevant communication cell is forwarded in the marked time slot or the message cells of the relevant read-out list are forwarded in the marked time slot and a corresponding number of subsequent time slots.

2. Method according to Claim 1, characterized in that the time slot in which a respective message cell is intended to be forwarded is determined with the aid of a leaky-bucket procedure which evaluates leaky-bucket variables for each virtual connection.

3. Method according to Claim 2, characterized in that the leaky-bucket variables include the current filling level, the maximum filling level, the outlet rate, the current feed quantity and the time of arrival of the preceding message cell which is part of the virtual connection in question.

4. Method according to one of the preceding Claims, characterized in that non-rejected message cells are each stored in a storage line of a message cell memory (CM) with random access.

5. Method according to Claim 4, characterized in that the marking, corresponding to a restrictive time slot, of a respective messages cell is carried out in a memory location, corresponding to the respective time slot, of a cyclically driven memory (TA) by storing the address of the storage line of the message cell memory (CM), in which storage line the respective message cell is stored.

6. Method according to Claim 5, characterized in that the designation of memory locations of the memory (TA) which are occupied with storage line addresses and whose contents still cannot be processed during the cyclical driving of the respective memory location due to a continuing processing of preceding memory locations is stored in a FIFO (first-in-first-out) memory (IW) whose contents are processed with priority with respect to the contents of the memory (TA).

7. Method according to one of Claims 4 to 6, characterized in that it is already established during each message cell cycle into which storage line of the message cell memory (CM) writing-in can take place in the subscribed message cell cycle and from which storage line of the message cell memory (CM) reading-out is to take place.

8. Method according to one of Claims 4 to 7, characterized in that message cells which are intended to be forwarded to the same time slot are connected to form one read-out list in that a respective pointer (Ptr) which is stored in the same storage line of the message cell memory (CM) as the message cell which is to be forwarded in the respective time slot as the, up to this point, last message cell refers to the address of the storage line of the message cell memory (CM) in which the message cell which is intended tobeforwarded in the relevant time slot as temporarily last message cell is located.

9. Method according to one of the preceding claims, characterized in that the message cells which are connected in each case to form read-out lists are forwarded starting with the last message cell which has been connected to the read-out list.

10. Method according to one of the preceding claims which is used with subscriber devices with highly fluctuating message cell sequence to make the message cell sequence more uniform.

## Revendications

1. Procédé pour contrôler le débit binaire de transmission, fixé pour des transmissions de cellules d'informations selon un procédé de transmission asynchrone au cours de l'établissement de liaisons virtuelles, dans des lignes de transmission dans un système de commutation, notamment un système de commutation à large bande, des cellules d'informations, qui conduisent à un dépassement d'un débit binaire de transmission fixé pour la liaison associée, étant rejetées,
caractérisé par le fait
que pour chaque cellule d'informations, on détermine en fonction du débit binaire maximal de transmission fixé pour la liaison associée et de l'intervalle de temps des cellules d'informations associées à la même liaison et destinées à être transmises, un créneau temporel, dans lequel la cellule d'informations considérée doit être retransmise,
des cellules d'informations, pour lesquelles on détermine un créneau temporel qui dépasse un intervalle de temps prédéterminé par rapport à l'instant actuel, étant rejetées, et
chaque cellule d'informations non rejetée étant mémorisée en liaison avec un repère, qui correspond au créneau temporel respectif déterminé, des cellules d'informations, qui doivent être retransmises dans un même créneau temporel, étant reliées pour former une liste de lecture,
on retransmet ensuite la cellule d'informations considérée dans le créneau temporel repéré ou les cellules d'informations de la liste considérée de lecture dans le créneau temporel repéré et d'un nombre correspondant de créneaux temporels suivants.

2. Procédé suivant la revendication 1, caractérisé par le fait que l'on détermine le créneau temporel, dans lequel une cellule respective d'informations doit être retransmise, à l'aide d'une procédure Leaky-Bucket, qui évalue les grandeurs Leaky-Bucket pour chaque liaison virtuelle.

3. Procédé suivant la revendication 2, caractérisé par le fait que les grandeurs Leaky-Bucket incluent l'état de remplissage actuel, l'état de remplissage maximum, le débit d'évacuation, la quantité actuelle arrivante et l'instant d'arrivée de la cellule d'informations précédente, qui est associée à la liaison virtuelle considérée.

4. Procédé suivant l'une des revendications précédentes, caractérisé par le fait que l'on mémorise les cellules d'informations non rejetées respectivement dans une ligne d'une mémoire (CM) de cellules d'informations, à accès direct.

5. Procédé suivant la revendication 4, caractérisé par le fait que le repère, qui correspond à un créneau temporel respectif, d'une cellule respective d'informations s'effectue par mémorisation de l'adresse de la mémoire (CM) de cellules d'informations, dans laquelle est mémorisée la cellule d'informations considérée, en un emplacement, qui correspond au créneau temporel respectif, d'une mémoire (TA) commandée cycliquement.

6. Procédé suivant la revendication 5, caractérisé par le fait que l'on mémorise la désignation d'emplacements de la mémoire (TA), qui sont occupés par des adresses de lignes de mémoire et dont le contenu ne peut pas encore être traité lors de la commande cyclique de l'emplacement respectif de mémoire du fait d'un traitement, encore en cours, d'emplacements précédents de la mémoire, dans une mémoire FIFO (First-In-First-Out) (IW), dont le contenu est traité de façon prioritaire par rapport au contenu de la mémoire (TA).

7. Procédé suivant l'une des revendications 4 à 6, caractérisé par le fait que déjà pendant chaque cycle de cellules d'informations on fixe la ligne de la mémoire (CM) de cellules d'informations dans laquelle on peut enregistrer dans le cycle suivant de cellules d'informations et la ligne de la mémoire de cellules d'informations (CM) dans laquelle il faut lire.

8. Procédé suivant l'une des revendications 4 à 7, caractérisé par le fait que l'on relie des cellules d'informations, qui doivent être retransmises dans un même créneau temporel, pour former une liste de lecture, par le fait qu'un pointeur respectif (Ptr), qui est mémorisé dans la même ligne de la mémoire de cellules d'informations (CM) que la cellule d'informations, qui doit être retransmise en tant cellule d'informations, qui était jusqu'alors la dernière, dans le créneau temporel considéré, désigne l'adresse de la cellule de la mémoire de cellules d'informations (CM), dans laquelle est située la cellule d'informations, qui doit être retransmise en tant que provisoirement dernière cellule d'informations dans le créneau temporel considéré.

9. Procédé suivant l'une des revendications précédentes, caractérisé par le fait que l'on retransmet les cellules d'informations, qui sont réunies respectivement pour former une liste de lecture, en commençant par la cellule d'informations qui a été reliée en dernier lieu à la liste de lecture.

10. Procédé suivant l'une des revendications précédentes, que l'on met en oeuvre dans des appareils d'abonnés ayant une suite de cellules d'informations, qui fluctue beaucoup, pour l'égalisation de la suite des cellules d'informations.
